Europäisches Patentamt

(19) European Patent Office

Office européen des brevets

(11) Veröffentlichungsnummer: **0 264 608**
**B1**

(12) # EUROPÄISCHE PATENTSCHRIFT

(45) Veröffentlichungstag der Patentschrift:
**31.10.90**

(51) Int. Cl.⁵: **F16F 15/32, F02D 1/04**

(21) Anmeldenummer: **87113226.2**

(22) Anmeldetag: **10.09.87**

(54) **Fliehgewichtsträger.**

(30) Priorität: **24.10.86 DE 3636179**

(43) Veröffentlichungstag der Anmeldung:
**27.04.88 Patentblatt 88/17**

(45) Bekanntmachung des Hinweises auf die Patenterteilung:
**31.10.90 Patentblatt 90/44**

(84) Benannte Vertragsstaaten:
**DE FR GB IT**

(56) Entgegenhaltungen:
**DE-A- 1 576 338**
**DE-C- 1 240 742**
**US-A- 2 855 230**

**WERKSTATTHANDBUCH DER KLÖCKNER-HUMBOLDT-DEUTZ AG für den Motor FL511/W, Juli 1979**

(73) Patentinhaber: **Klöckner-Humboldt-Deutz Aktiengesellschaft,**
**Deutz-Mülheimer-Strasse 111 Postfach 80 05 09,**
**D-5000 Köln 80(DE)**

(72) Erfinder: **Krause, Horst-Herbert, Dr., Dahler Strasse 2,**
**D-5063 Overath-Landwehr(DE)**
Erfinder: **Lemme, Werner, Im Hof 38,**
**D-5064 Rösrath 1(DE)**

## Beschreibung

Die Erfindung betrifft einen Fliehgewichtsträger nach dem Oberbegriff des ersten Anspruchs.

Im Werkstatthandbuch 2911921 vom Juli 1979 des Motors FL 511/W der Klöckner-Humboldt-Deutz AG ist auf Seite 123 ein Fliehkraftregler mit einem scheibenförmigen Fliehgewichtsträger abgebildet, der drei Ausnehmungen zur Aufnahme jeweils eines schneidengelagerten, hakenförmigen Fliehgewichtes aufweist. Auf dem Fliehgewichtsträger ist eine Reglermuffe angeordnet, die von den Fliehgewichten je nach ihrer radialen Auslenkung in ihrer axialen Lage kraftbeaufschlagt wird. Fliehgewichtsträger, Fliehgewichte und Reglermuffe werden von der Nockenwelle der Brennkraftmaschine in Rotation versetzt. Die Fliehgewichte werden einerseits durch die Reglermuffe und andererseits durch den Fliehgewichtsträger in ihrer radialen Lage auf dem Fliehgewichtsträger fixiert.

Nachteilig an dieser Anordnung ist, daß die Fliehgewichte bei der Montage nach komplizierten Bewegungsabläufen eingesetzt werden müssen und im Stillstand leicht aus ihrem Lager rutschen können.

In der DE-C 1 240 742 ist ein Drehzahlregler für Kraftmaschinen, insbesondere Hubkolben-Brennkraftmaschinen beschrieben, der aus einem Fliehgewichtsträger besteht, dessen Arbeitsvermögen gleichfalls auf der Fliehkraftwirkung von mechanisch angetriebenen, auf Schneiden gelagerten Fliehgewichten beruht. Die Fliehgewichte sind hierbei als Blechpressteil ausgebildet und sind winkelhebelartig ausgeführt. Auch dieser Fliehgewichtsträger hat den Nachteil, daß die Fliehgewichte im Stillstand leicht aus ihrem Lager rutschen können.

Zu der DE-A 1 576 338 ist ein Fliehkraftdrehzahlregler gezeigt, der zur Hubbegrenzung der Fliehgewichte einen axial vom Fliehgewichtsträger beabstandeten Anschlag aufweist. Die Fliehgewichte bilden mit dem Fliehgewichtsträger und dem hubbegrenzenden Anschlag keine Baueinheit. Vielmehr müssen bei der Montage die Fliehgewichte durch die Reglermuffe gehalten werden, so daß eine einfache Montage des Fliegewichtsträgers im Fliehkraftregler nicht gewährleistet ist.

Aufgabe der Erfindung ist es, einen Fliehgewichtsträger zu schaffen, der leicht montierbar ist.

Erfindungsgemäß wird die Aufgabe durch die kennzeichnenden Merkmale des ersten Anspruchs gelöst.

Durch die Sicherungsmittel sind die Fliehgewichte am Fliehgewichtsträger festgelegt und können nicht aus den Ausnehmungen desselben rutschen. Dadurch bilden die Fliehgewichte mit dem Fliehgewichtsträger ein einteiliges Bauteil, welches vormontiert werden kann und bei der Montage des Fliehkraftreglers nur noch als Ganzes eingesetzt werden braucht.

In einer vorteilhaften Ausführungsform besteht das Sicherungsmittel aus einem über den Ausnehmungen liegenden Sicherungsring, der einen radialen Anschlag für die Fliehgewichte bildet. Vorteilhafterweise sind auf dem Fliehgewichtsträger in Umfangsrichtung im gleichen radialen Abstand von der Mittelachse des Fliehgewichtsträgers Ausklinkungen angeordnet, in die der Sicherungsring eingeklemmt ist.

Es ist auch sinnvoll, wenn der Sicherungsring axiale Halteösen aufweist, die in Ausnehmungen des Fliehgewichtsträgers einsteckbar sind.

In einer weiteren vorteilhaften Ausführungsform ist der Sicherungsring unlösbar mit dem Fliehgewichtsträger verbunden. Dies kann z. B. durch Schweißen, Löten oder Kleben geschehen.

In einer besonderen erfindungsgemäßen Ausführung werden die Fliehgewichte nach ihrer Montage auf dem Fliehgewichtsträger durch die Ausnehmungen selbst gehalten, in dem die Ausnehmungen entsprechend verformt werden.

Weiterhin ist es zweckmäßig, wenn an der Ausnehmung biegbare Nasen angeordnet sind, die nach der Montage der Fliehgewichte auf dem Fliehgewichtsträger umgebogen werden und damit einen radialen Anschlag für die Fliehgewichte bilden.

Weitere Merkmale der Erfindung ergeben sich aus der Beschreibung und den Zeichnungen, die verschiedene Ausführungsformen der Erfindung zeigen und nachfolgend näher beschrieben sind. Es zeigt:

Fig. 1 zwei Ausführungsformen eines erfindungsgemäßen Fliehgewichtsträgers in Draufsicht und im Querschnitt,

Fig. 2a einen Ausschnitt aus einem Fliehgewichtsträger in Draufsicht mit einem durch einen Sicherungsring gehaltenen Fliehgewicht,

Fig. 2b diesen Ausschnitt im Schnitt,

Fig. 2c,d im Schnitt die Halterung des Sicherungsringes mit zwei Ausführungsformen des Sicherungsringes,

Fig. 3 einen Fliehgewichtsträger mit einem dazugehörigen Sicherungsring, der axiale Halteösen aufweist,

Fig. 4 eine Anordnung ähnlich Fig. 3, wobei die Halteösen über den Rand des Fliehgewichtsträgers gestülpt sind,

Fig. 5 ein Sicherungsmittel zum Befestigen der Fliehgewichte auf dem Fliehgewichtsträger, welches aus einer Verformung der Ausnehmungen besteht,

Fig. 6 ein Sicherungsmittel zum Befestigen der Fliehgewichte auf dem Fliehgewichtsträger, welches aus biegbaren Nasen besteht.

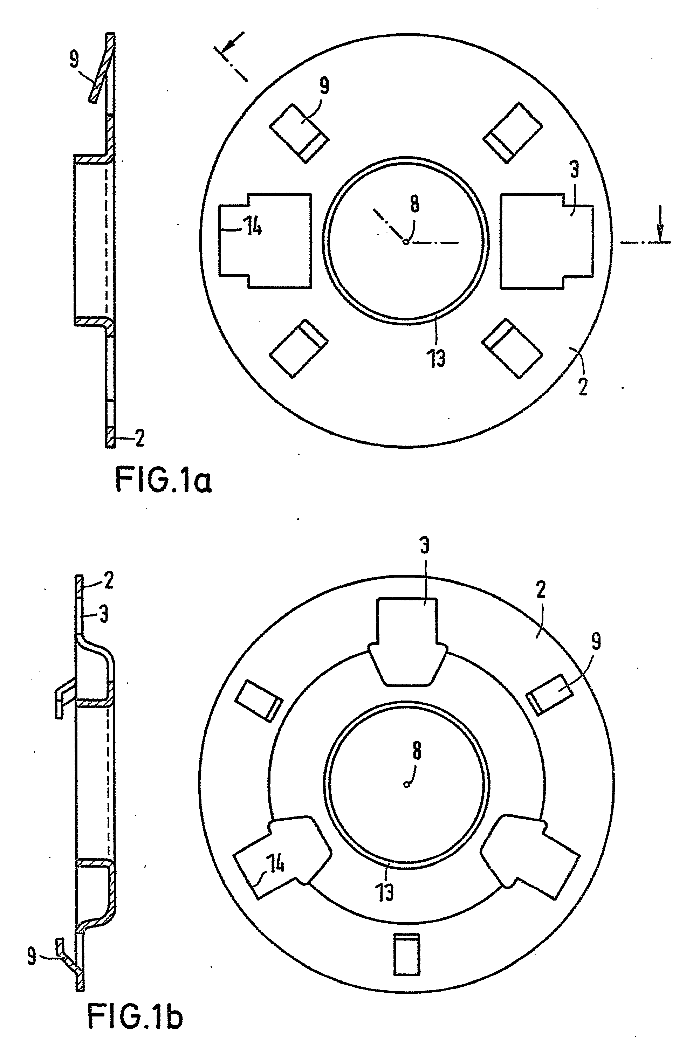

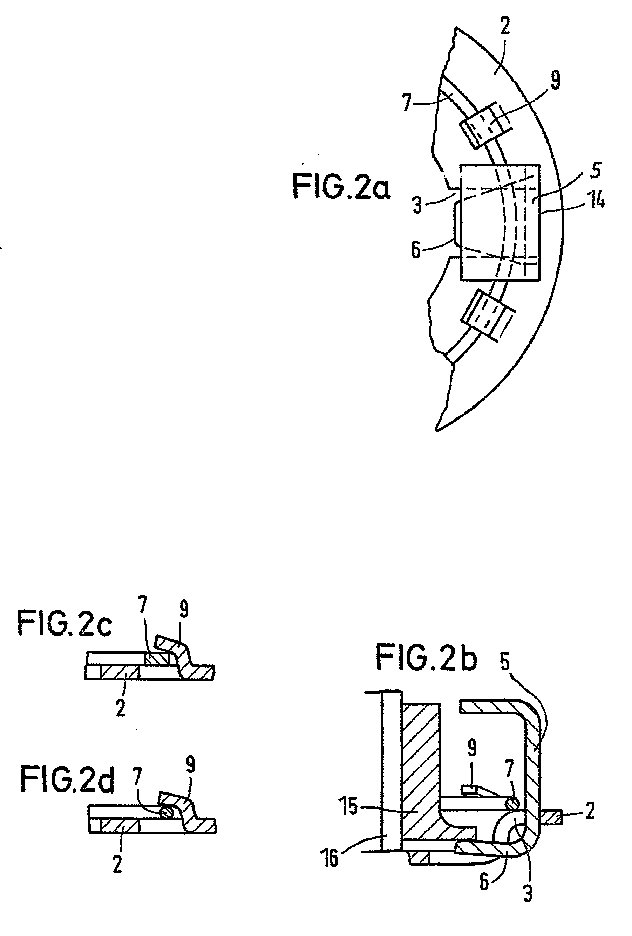

Fig. 1 und Fig. 2 zeigen zwei Ausführungsformen eines erfindungsgemäßen scheibenförmigen Fliehgewichtsträgers 2, wobei in der Ausführung gemäß Fig. 1a zwei Ausnehmungen 3 zum Einsatz je eines schneidengelagerten Fliehgewichts 5, 6 angeordnet sind. Diese Ausnehmungen 3 sind in bezug auf die Mittelachse 8 des Fliehgewichtsträgers 2 diametral gegenüberliegend angeordnet und umgeben eine Öffnung 13, die zur Aufnahme einer Antriebswelle 16 dient. Die Ausnehmungen 3 haben eine rechteckige Form, wobei an der radial außenliegenden Kante der Ausnehmung 3 eine Auflagekante 14 angeordnet ist. Diese Auflagekante 14 dient als Lagerung für die schneidengelagerten Fliehgewichte (siehe Fig. 2).

Erfindungsgemäß sind die Fliehgewichte 5, 6 durch Sicherungsmittel am Fliehgewichtsträger 2 befestigt und bilden mit diesem ein einteiliges montierbares Bauteil.

Eines dieser erfindungsgemäßen Sicherungsmittel ist ein Sicherungsring 7, der über den Ausnehmungen 3 liegt und einen radialen Anschlag für die Fliehgewichte 5, 6 bildet, während der andere Anschlag durch den Fliehgewichtsträger selbst gebildet ist. Um den Sicherungsring 7 auf dem Fliehgewichtsträger 2 befestigen zu können, sind auf dem Fliehgewichtsträger 2 in Umfangsrichtung im gleichen radialen Abstand von der Mittelachse 8 des Fliehgewichtsträgers 2 Ausklinkungen 9 angeordnet, in die der Sicherungsring 7 einklemmbar ist. In der Ausführung gemäß Fig. 1a ist eine Ausnehmung 3 jeweils zwischen zwei Ausklinkungen 9 angeordnet. Diese Ausklinkungen 9 bestehen in dieser Ausführunsform aus einem reckteckigen Teilstück des Fliehgewichtsträgers 2, welches im spitzen Winkel vom Fliehgewichtsträger 2 absteht und dadurch eine Halterung zur Aufnahme des Sicherungsringes 7 bildet. Die Ausbildung der Ausklinkung 9 kann aus fertigungstechnischen Gründen auch eine abgerundete Form aufweisen.

In Fig. 1b ist eine Ausführungsform eines erfindungsgemäßen Fliehgewichtsträgers 2 mit drei Ausnehmungen 3 zur Aufnahme jeweils eines Fliehgewichtes 5, 6 gezeigt. Diese drei Ausnehmungen 3 sind in Umfangsrichtung gleichmäßig auf dem Fliehgewichtsträger 2 verteilt und sind pfeilförmig ausgebildet. Es sind auch andere Ausbildungen vorteilhaft. Zwischen jeweils zwei Ausnehmungen 3 ist eine Ausklinkung 9, ähnlich wie in Fig. 1a beschrieben, angeordnet, wobei hier ebenfalls ein rechteckiges Teilstück des Fliehgewichtsträgers 2 vom Fliehgewichtsträger 2 absteht, jedoch das äußere Ende des Teilstücks zur Richtung der Reglermuffe (nicht gezeigt) abgebogen ist. Diese Ausklinkung 9 bildet wie in Fig. 1a beschrieben, einen radialen Anschlag für den Sicherungsring 7.

In Fig. 2a und Fig. 2b ist ein Ausschnitt aus einem erfindungsgemäßen Fliehgewichtsträger 2 in Draufsicht und im Schnitt mit eingesetztem Sicherungsring 7 gezeigt. Es ist zu erkennen, daß das Fliehgewicht 5, 6, welches aus einem etwa in Axialrichtung des Fliehgewichtsträgers 2 ausgerichteten Gewichtsarm 5 und einem zweiten, etwa parallel zur Radialebene des Fliehgewichtsträgers 2 liegenden Verstellarm 6 besteht, schneidengelagert auf dem Fliehgewichtsträger 2 aufliegt und durch den Sicherungsring 7 gehalten ist, wobei der Sicherungsring 7 einen radialen Anschlag für das Fliehgewicht 5, 6 bildet. In Fig. 2b ist eine Reglermuffe 15 eingezeichnet, die von den Fliehgewichten 5, 6 in ihrer axialen Lage kraftbeaufschlagt wird und axial verschiebbar auf der Antriebswelle 16 angeordnet ist.

Der Sicherungsring 7 kann vorteilhafterweise einen rechteckigen (Fig. 2c) oder kreisförmigen (Fig. 2d) Querschnitt haben.

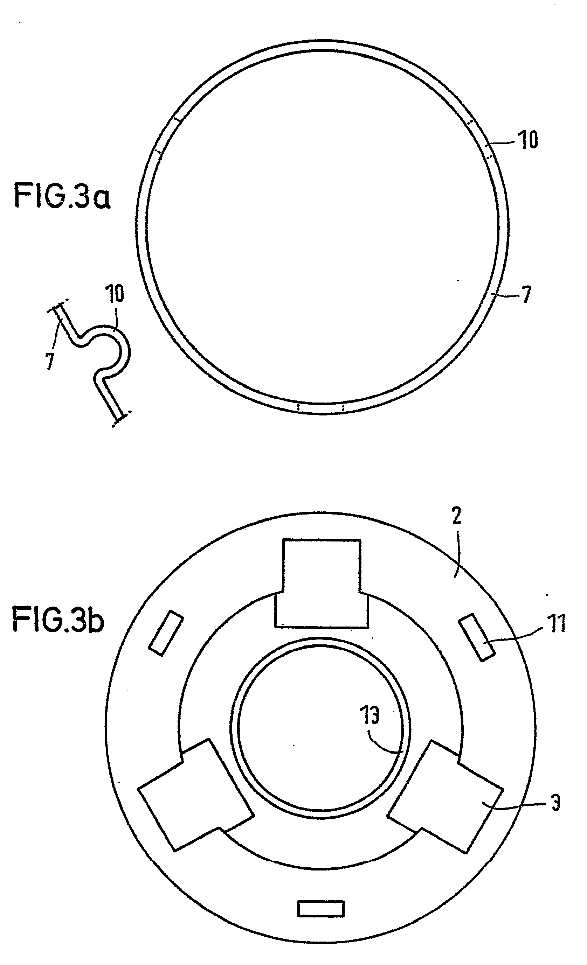

In Fig. 3 ist eine Ausführungsform gezeigt, bei der keine Ausklinkungen 9 zur Halterung des Sicherungsringes 7 auf dem Fliehgewichtsträger 2 angeordnet sind, sondern der Fliehgewichtsträger 2 Ausnehmungen 11 aufweist, die im gleichen radialen Abstand von der Mittelachse 8 des Fliehgewichtsträgers 2 angeordnet sind und in die der Sicherungsring 9 eingesteckt wird. Dazu weist der Sicherungsring 7 axiale Halteösen 10 auf, die z.B. in Form einer Schlaufe axial vom Sicherungsring 7 abstehen.

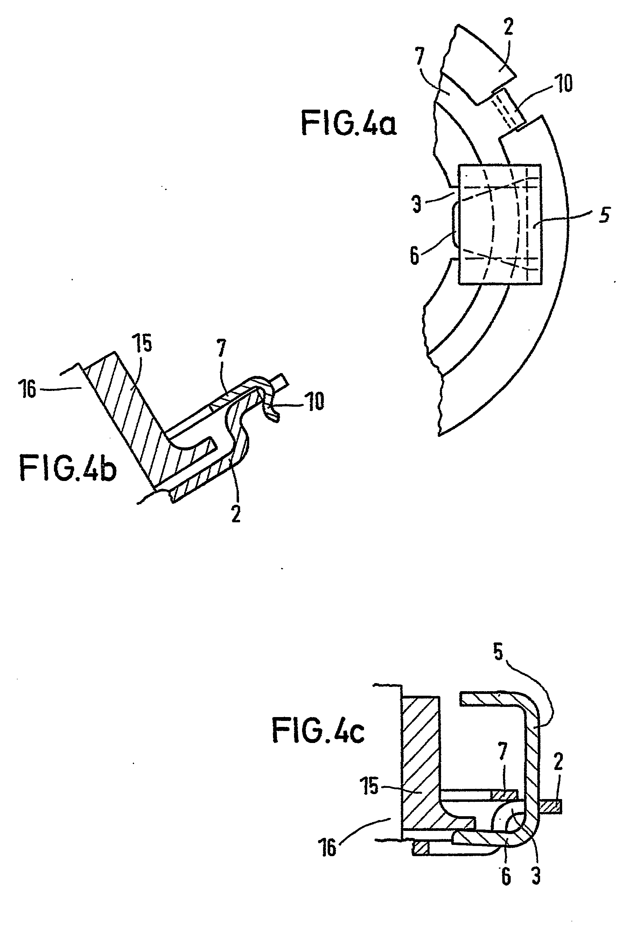

In Fig. 4 ist eine Anordnung, ähnlich wie in Fig. 3 beschrieben, gezeigt, wobei die Halteösen 10 über den Rand des Fliehgewichtsträgers 2 gestülpt sind. Fig. 4a zeigt den Fliehgewichtsträger 2 mit dem erfindungsgemäßen Sicherungsring 7 in Draufsicht und die Figuren 4b und 4c im Querschnitt, wobei in Fig. 4b der Schnitt durch eine Halteöse 10 und in Fig. 4c durch ein Fliehgewicht 5, 6 führt. Am Sicherungsring 7 sind auf dem Umfang gleichmäßig verteilt radiale Erweiterungen angeordnet, die in axiale Halteösen 10 übergehen. Diese radialen Halteösen 10 sind elastisch und haben eine gebogene Form. Zur Befestigung des Sicherungsringes 7 auf dem Fliehgewichtsträger 2 umgreifen die Halteösen 10 den Rand des Fliehgewichtsträgers 2, der an diesen Stellen jeweils einen radialen Einschnitt aufweist.

Es ist auch vorteilhaft, den Sicherungsring 7 unlösbar mit dem Fliehgewichtsträger zu verbinden. Diese unlösbare Verbindung kann z. B. durch Schweißen, Löten oder Kleben geschehen. Diese Ausführungsform hat den Vorteil, daß am Fliehgewichtsträger keine Fixpunkte, Ausklinkungen oder Haltenasen erforderlich sind.

Als Sicherungsmittel zur Befestigung des Sicherungsringes 7 auf dem Fliehgewichtsträger 2 ist es auch vorteilhaft, nach der Montage der Fliehgewichte 5, 6 auf dem Fliehgewichtsträger 2 die Ausnehmungen 3 so zu verformen, daß die Fliehgewichte 5, 6 dadurch gehalten werden.

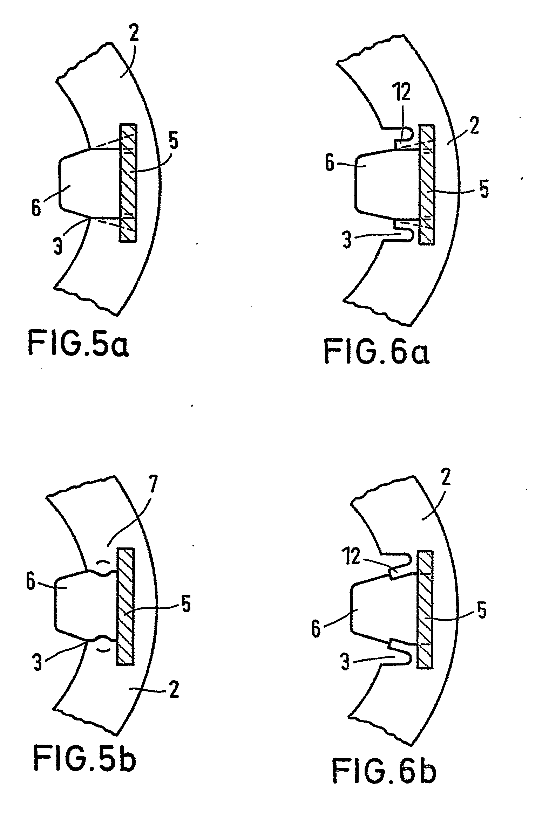

In Fig. 5 ist dieses Sicherungsmittel vor der Montage (Fig. 5a) und nach der Montage (Fig. 5b) gezeigt. Die Verformung der Ausnehmung 3 kann z.B. durch ein Ausbeulen und damit durch eine bereichsweise Verengung der Ausnehmung 3 geschehen.

In Fig. 6 ist ein alternatives zweckmäßiges Sicherungsmittel gezeigt. Hier sind an der Ausnehmung 3 biegbare Nasen 12 angeordnet, die nach der Montage der Fliehgewichte 5, 6 auf dem Fliehgewichtsträger 2 umgebogen werden und damit einen radialen Anschlag für die Fliehgewichte 5, 6 bilden. Fig. 6a zeigt die Nasen 12 vor der Montage 12 und Fig. 6b nach der Montage.

Ferner kann es vorteilhaft sein, im Fliehgewichtsträger 2 neben den Ausnehmungen 3 Bohrungen anzuordnen und diese Bohrungen durch einen Draht oder dergl. zu verbinden, so daß der Draht einen radialen Anschlag für die Fliehgewichte 5, 6 bildet. Der Draht kann dabei aus einem geraden Stück mit umgebogenen Enden bestehen und sich damit nach dem Einsetzen in die Bohrungen selbst fixieren.

## Patentansprüche

1. Scheibenförmiger Fliehgewichtsträger (2) für einen Fliehkraftregler, insbesondere für den Einsatz in Brennkraftmaschinen, wobei der Fliehgewichtsträger (2) Ausnehmungen (3) zur Aufnahme schneidengelagerter Fliehgewichte (5, 6) aufweist, und die Fliehgewichte (5, 6) im wesentlichen aus einem ersten, etwa in Axialrichtung des Fliehgewichtsträgers (2) ausgerichteten Gewichtsarm (5) und einem zweiten, etwa parallel zur Radialebene des Fliehgewichtsträgers (2) liegenden Verstellarm (6) bestehen, dadurch gekennzeichnet, daß die Fliehgewichte (5, 6) durch Sicherheitsmittel am Fliehgewichtsträger (2) schwenkbar befestigt sind und mit diesem ein einteilig montierbares Bauteil bilden.

2. Fliehgewichtsträger nach Anspruch 1, dadurch gekennzeichnet, daß ein über den Ausnehmungen (3) liegender Sicherungsring (7) einen radialen Anschlag für die Fliehgewichte (5, 6) bildet.

3. Fliehgewichtsträger nach Anspruch 2, dadurch gekennzeichnet, daß auf dem Fliehgewichtsträger (2) in Umfangsrichtung im gleichen radialen Abstand von der Mittelachse (8) des Fliehgewichtsträgers (2) Ausklin kungen (9) angeordnet sind, in die der Sicherungsring (7) eingeklemmt ist.

4. Fliehgewichtsträger nach Anspruch 2 oder 3, dadurch gekennzeichnet, daß der Sicherungsring (7) axiale Halteösen (10) aufweist, die in Ausnehmungen (11) des Fliehgewichtsträgers (2) einsteckbar sind.

5. Fliehgewichtsträger nach Anspruch 2, dadurch gekennzeichnet, daß der Sicherungsring (7) unlösbar mit dem Fleihgewichtsträger (2) verbunden ist.

6. Fliehgewichtsträger nach Anspruch 1, dadurch gekennzeichnet, daß nach der Montage der Fliehgewichte (5, 6) auf dem Fliehgewichtsträger (2) diese durch Verformen der Ausnehmungen (3) gehalten werden.

7. Fliehgewichtsträger nach Anspruch 1, dadurch gekennzeichnet, daß an der Ausnehmung (3) biegbare Nasen (12) angeordnet sind, die nach der Montage der Fliehgewichte (5, 6) auf dem Fliehgewichtsträger (2) umgebogen werden und damit einen radialen Anschlag für die Fliehgewichte (5, 6) bilden.

## Claims

1. A disc-shaped centrifugal weight carrier (2) for a centrifugal governor, particularly for use in an internal combustion engine, in which the carrier (2) is provided with apertures (3) serving to accommodate knife-edge supported centrifugal weights (5, 6), and in which each weight (5, 6) comprises a first, weighting, leg (5) extending substantially in the carrier's (2) axial direction and a second, adjusting, leg (6) disposed substantially parallel with the carrier's (2) radial plane, characterized in that each of the centrifugal weights (5, 6) is hingedly secured by means of a safety device to the weight carrier (2) and forms a one-piece component therewith installable as such.

2. A centrifugal weight carrier according to claim 1, characterized in that a retaining ring (7) located above the apertures (3) forms a radial stop for the weights (5, 6).

3. A centrifugal weight carrier according to claim 2, characterized in that the carrier (2) has punched-out latches (9) arranged annularly at a uniform radial distance from the carrier's (2) main axis, and in that the retaining ring (7) is clamped by the latches.

4. A centrifugal weight carrier according to claim 2 or claim 3, characterized in that the ring (7) is provided with axially extending holding lugs (10) arranged to be inserted into further apertures (11) in the carrier (2).

5. A centrifugal weight carrier according to claim 2, characterized in that the ring (7) is undetachable secured to the carrier (2).

6. A centrifugal weight carrier according to claim 1, characterized in that the centrifugal weights (5, 6), after having been fitted to the weight carrier (2), are held thereon by deforming the apertures (3).

7. A centrifugal weight carrier according to claim 1, characterized in that each of the apertures (3) is provided with bendable noses (12) which, after the weights (5, 6) have been fitted to the carrier (2), are bent and thus form the radial stop for the weights.

## Revendications

1. Support de masselottes centrifuges (2), en forme de disque, pour un régulateur à force centrifuge, prévu notamment pour être mis en œuvre sur des moteurs à combustion interne, ce support de masselottes centrifuges (2) comportant des évidements (3) destinés à recevoir des masselottes à force centrifuge (5, 6) montées sur couteaux, ces masselottes centrifuges (5, 6) étant essentiellement constituées par un premier bras de masselotte (5) orienté à peu près en direction axiale du support de masselottes centrifuges (2), et par un second bras de réglage (6) à peu près parallèle au plan radial du support de masselottes centrifuges (2), support de masselottes à force centrifuge caractérisé en ce que les masselottes centrifuges (5, 6) sont fixées sur le support de masselottes centrifuges, en étant susceptibles de pivoter, par un moyen d'arrêt, et constituent avec celui-ci un élément de construction susceptible d'être monté d'un seul tenant avec ce support.

2. Support de masselottes centrifuges selon la revendication 1, caractérisé en ce qu'un anneau d'arrêt (7), placé sur les évidements (3), constitue une butée radiale pour les masselottes centrifuges (5, 6).

3. Support de masselottes centrifuges selon la revendication 2, caractérisé en ce que sur le support de masselottes centrifuges (2), il est prévu, en direction périphérique et à une même distance radiale de l'axe médian (8) de ce support, des encoches (9) dans lesquelles l'anneau d'arrêt (7) est coincé.

4. Support de masselottes centrifuges selon la revendication 2 ou la revendication 3, caractérisé en ce que l'anneau d'arrêt (7) comporte des œillets axiaux de retenue (10), qui sont enfichables dans des évidements (11) du support de masselottes centrifuges (2).

5. Support de masselottes centrifuges selon la revendication 2, caractérisé en ce que l'anneau d'arrêt (7) est relié de façon inamovible au support de masselottes centrifuges (2).

6. Support de masselottes centrifuges selon la revendication 1, caractérisé en ce qu'après le montage des masselottes centrifuges (5, 6) sur le support de masselottes centrifuges (2), ces masselot-

7 EP 0 264 608 B1

tes sont maintenues par déformation des évidements (3).

7. Support de masselottes centrifuges selon la revendication 1, caractérisé en ce qu'il est prévu sur les évidements (3) des becs flexibles (12) qui, après le montage des masselottes centrifuges (5, 6), sont repliés sur le support de masselottes centrifuges (2) et constituent ainsi une butée radiale pour les masselottes centrifuges (5, 6).

FIG.1a

FIG.1b

EP 0 264 608 B1

FIG.2a

FIG.2c

FIG.2d

FIG.2b

FIG.3a

FIG.3b

FIG.4a

FIG.4b

FIG.4c

FIG.5a

FIG.6a

FIG.5b

FIG.6b